(19) Europäisches Patentamt

European Patent Office

Office européen des brevets

(11) EP 0 726 290 B2

(12) NEW EUROPEAN PATENT SPECIFICATION

(45) Date of publication and mention of the opposition decision:
19.10.2005 Bulletin 2005/42

(45) Mention of the grant of the patent:
08.05.2002 Bulletin 2002/19

(21) Application number: 96300858.6

(22) Date of filing: 08.02.1996

(51) Int Cl.7: $C08L\ 21/00$, $C08L\ 23/02$

(54) **A polyolefin based crosslinked foam**

Vernetzter Schaum auf Grund von Polyolefin

Mousse réticulée à base de polyoléfine

(84) Designated Contracting States:
GB NL

(30) Priority: 08.02.1995 JP 2053795
10.02.1995 JP 2282595

(43) Date of publication of application:
14.08.1996 Bulletin 1996/33

(73) Proprietor: TORAY INDUSTRIES, INC.
Tokyo 103-8666 (JP)

(72) Inventors:
• Uejyukkoku, Nario
Gamou-gun, Shiga-ken, 520-25 (JP)
• Nakatsu, Yukinari
Ohtsu-shi, Shiga-ken, 520 (JP)

(74) Representative: Coleiro, Raymond et al
Mewburn Ellis LLP
York House
23 Kingsway
London WC2B 6HP (GB)

(56) References cited:
DE-A- 1 694 130          DE-A- 2 839 733
US-A- 4 203 815

• DATABASE WPI Section Ch, Week 9403 Derwent Publications Ltd., London, GB; Class A18, AN 94-022953 XP002003422 & JP-A-05 331 246 (JAPAN SYNTHETIC RUBBER CO LTD), 14 December 1993
• DATABASE WPI Section Ch, Week 8647 Derwent Publications Ltd., London, GB; Class A18, AN 86-308854 XP002003423 & JP-A-61 228 033 (KURARAY KK), 11 October 1986
• "Polymere Werkstoffe" Georg Thieme Verlag 1984, Vol.1, pp.82, 83, 112
• "Die Kunststoffe und ihre Eigenschaften", VDI Kunststofftechnik 1992, pp. 296-299
• Product information of Hercules Resins, printed 16.05.2000
• Hansjürgen Saechting: Kunststoff Taschenbuch, 24th edition, pp. 12-15
• Polymere Werkstoffe, Band III, Technologie 2, Georg Thieme Verlag 1984, p. 351
• Bayer-Kunststoffe, 2. Auflage, 1959, pp. 180, 181, 186, 187
• Rubber Technology and Manufacture, 2nd Edition, 1982, pp. 370, 371
• Ullmann's Encyclopedia of Industrial Chemistry, Vol. 31, pp. 519-521
• JSR DYNARON Basic Characteristics

Remarks:
The file contains technical information submitted after the application was filed and not included in this specification

EP 0 726 290 B2

**Description**

The present invention relates to a polyolefin based crosslinked foam. In more detail, the present invention relates to a polyolefin based crosslinked foam excellent in impact absorbability, vibration absorbability and heat insulation, which can be used for various kinds of industrial applications such as materials for the interior of automobiles, cushioning, building, furniture and home use electrical appliances.

In recent years, polyolefin based crosslinked foams have become widely used as materials for cushioning, the interior of automobiles, building, furniture, domestic appliances, etc. since they are light, excellent in heat insulation and sound proofing and can be easily molded by various processes.

One example of a known cross linked from having sound and vibration absorbability, heat insulation and cushionability is in JP-A-6/ 228 033.

Other vibration-resistant compositions based on rubber-reinforced thermoplastic resins are also known, eg. from JP-A-05 33/ 246.

The conventional polyolefin based crosslinked foams are variously adjusted in heat resistance, cushionability and impact absorbability by properly selecting the degree of crosslinking, expansion ratio and thickness. However, the high crystallinity of the resin makes the impact resilience high, not allowing vibration absorbability to be high simultaneously. As general tendencies, heat resistance is better at a higher crosslinking degree, while impact absorbability is higher at a lower crystallinity such as seen in butyl rubber. Because of these contradictory tendencies, it is difficult to satisfy all the desired properties simultaneously.

The present invention addresses the problem of providing a polyolefin based crosslinked foam satisfactory in impact absorbability and vibration absorbability as well as in cushionability, over a wide range of degrees of crosslinking.

According to a first aspect, the invention provides a crosslinked foam as defined in claim 1 hereof.

An especially preferred crosslinked foam for absorbing impact and vibration has an impact absorbability at 25°C of from 10 to 50% and a vibration absorbability at 20°C (C/Cc) of at least 0.1 and comprises:

 100 parts by weight of the polyolefin based resin (A) and,
 10 to 100 parts by weight of the conjugated diene polymer (B) having the peak of tan $\delta$ obtained by dynamic viscoelasticity measurement between -20°C and 40°C.

According to a second aspect, the invention provides the use of a crosslinked foam in accordance with the first aspect as a cushion material, while according to a third aspect, the invention provides a method of manufacturing a crosslinked foam comprising

 (a) mixing a polyolefin based resin (A) as defined in the first aspect of the invention with a conjugated diene polymer (B) having a peak tan $\delta$ value (obtained by dynamic viscoelasticity measurement) at a temperature between -20°C and 40°C inclusive; and
 (b) foaming and cross linking the mixture such as to have the defined degree of cross linking of 15 to 70%.

The mixture for manufacturing the foam comprises 100 parts by weight of the polyolefin based resin (A) and 10 to 100 parts by weight of the conjugated diene polymer (B).

Preferred embodiments of the invention will now be described.

To obtain an impact and vibration absorbable foam, we tested resins to be mixed with the polyolefin based resin and auxiliary agent for crosslinking, and correlated the peak temperature of tan $\delta$ obtained by the dynamic viscoelasticity measurement of the resin with the behavior caused when both the resins are crosslinked. As a result, we found a polyolefin based crosslinked foam satisfactory in impact absorbability and vibration absorbability as well as in moldability, heat resistance and cushionability, over a wide range of degrees of crosslinking. It is believed that such results were attained by reducing the effect of crystallinity of the polyolefin based resin and controlling the impact resilience.

The polyolefin based resin (A) used in the present invention is a homopolymer or random or block copolymer of olefin monomers selected from ethylene and propylene, or their copolymers such as with vinyl acetate, acrylic esters, methacrylic esters and maleic acid anhydride. The melting point of the polyolefin based resin (A) is preferably 70 to 165°C, more preferably, 80 to 155°C. If the melting point is lower than 70°C, although it is preferable in view of softness, impact absorbability and vibration absorbability of the product and prevention of decomposition of foaming agent while kneading in an extruder during a sheet manufacturing process, the product is too soft and difficult to handle at taking up or after treatment, or is unstable during manufacture, for instance, due to blocking. On the other hand, when the melting point is higher than 165°C, although the heat resistance can be improved, it is difficult to control exactly the expansion ratio of the product due to the decomposition of the foaming agent by shear-induced heat while kneading in an extruder. The melt flow rate (MFR) of the resin (A) is preferably 0.5 to 20g/10 min., more preferably, 1.5 to 10g/ 10 min. If the MFR is less than 0.5g/10 min., the melt viscosity of the resin becomes too high, and the expansion ratio may be difficult to control exactly due to the decomposition of the foaming agent caused by higher extrusion temperature to reduce the melt viscosity or higher extrusion pressure. On the other hand, when the MFR is more than 20g/10 min., although it is preferable for prevention of decomposition of the foaming agent caused by shear-induced high temperature, it is not generally preferable because a predetermined surface condition and thickness of the product cannot be obtained without using a particularly prepared manufacturing line (i.e. a plant having a quick cooling system).

The conjugated diene based polymer (B) has a peak tan δ within a temperature range of -20°C to 40°C and preferably a number average molecular weight of 30,000 to 500,000. It may be a fully unsaturated, or partially hydrogenated product and in particular may be a copolymer of an aromatic vinyl monomer, isoprene and butadiene, or a partially hydrogenated product therefrom. The aromatic vinyl monomer content in the conjugated diene based polymer or its hydrogenated product is preferably 5 to 50%, more preferably 10 to 35%. If the aromatic vinyl monomer content is more than 50%, the temperature range of the peak of tan δ shifts towards a lower temperature, to harden the resin itself, and undesirably brings about a lowering of the impact absorbability and vibration absorbability. If the content is less than 5%, the temperature range of the peak of tan δ shifts towards a higher temperature, to improve the flexibility as a rubber material for seemingly enhancing impact absorbability. However, in the present invention, since the crosslinked foam is high in expansion ratio, excessive flexibility causes the foam to be excessively deformed so as, on the contrary, undesirably to lower impact absorbability. The aromatic vinyl monomer used in the present invention can be selected from styrene based monomers and naphthalene based monomers, but styrene based monomers are preferable in view of productivity and price. The amounts of isoprene and butadiene in the conjugated diene based polymer of the present invention are preferably each 5 to 90%. If the amount of those monomers in the copolymer is more than 90%, crosslinking degree tends to be low and quality control of the foam, especially bubble size, becomes difficult. The hydrogenated ratio of the conjugated diene based polymer is preferably less than 90%, more preferably less than 80% and still more preferably less than 70%.

The peak of tan δ obtained by dynamic viscoelasticity measurement should be in a temperature range from -20°C to 40°C, preferably -5°C to 35°C. If the peak is outside this temperature range, the foam obtained is undesirably poor in impact absorbability and vibration absorbability. The number average molecular weight of the conjugated diene based polymer is preferably 30,000 to 500,000, more preferably 50,000 to 200,000. If the molecular weight is less than 30,000, the foam obtained is low in mechanical strength and very sticky, and blocking undesirably occurs in the production of the foam. On the other hand, if more than 500,000, the melt viscosity of the resin may become too high, and when it is melt-mixed with the polypropylene based resin, dispersibility may become too low due to the difference in viscosity, not allowing foaming control of the foam.

The method for preparing the conjugated diene based polymer used in the present invention is typically disclosed in JP-A-5-345833 but, of course, not limited thereto in the present invention.

When a chemical crosslinking agent is employed, this may result in the presence, in the final crosslinked foam, of units derived from a crosslinking agent (C), for example, a polyfunctional monomer and these may be present in an amount of 0.5 to 10%, preferably 0.5 to 5%, by weight of the foam. The crosslinking agent may be added to the resin composition prior to foaming.

When polyethylene is used as the polyolefin based resin (A) in the present invention, there are no particular restrictions as to its production method. In general, it can be selected from low density polyethylene obtained by high pressure polymerization, linear polyethylene based resins such as a copolymer of ethylene and an α-olefin with 4 to 12 carbon atoms obtained by low or medium pressure ion polymerization, ethylene vinyl acetate copolymers, ethylene alkyl acrylate copolymers, ternary copolymers with maleic anhydride, etc. Preferably the polyethylene based resin is selected from resins which can be crosslinked by electron beam irradiation only, without requiring the addition of a reactive crosslinking auxiliary such as divinylbenzene. The reason is that while the conjugated diene based polymer to be mixed has double bonds in the skeleton and crosslinked by electron beam irradiation, controlling the crosslinked state suitable for foaming requires that the respective resins are not greatly different in crosslinking degree at the same energy. Any one or more of the above polyethylene based resins can be used as a mixture without any limitation as far as a large difference between their respective degrees of crosslinking is not caused.

The melting point of the polyethylene based resin used in the present invention is 70 to 135°C, preferably 80 to 130°C. Melting points of lower than 70°C are undesirable since application of such means is limited in view of their poor heat resistance. Melting points higher than 135°C are preferable in view of the wider range of applicability of such resins, but undesirable since the substantially highly crystalline resin is highly rigid and makes the foam less cushionable.

The MFR of a polyethylene based resin as used for the present invention is preferably 0.5 to 10 g/10 min, more preferably 1.0 to 8 g/10 min. If MFR is less than 0.5 g/10 min, the melt viscosity of the resin may be so high that it is liable to cause the foaming agent to be undesirably decomposed, thereby forming coarse bubbles, by the shear heat generation during the production of the sheet to be foamed. On the other hand, if more than 10 g/10 min, although the melt viscosity is desirably low for the production of the sheet, the foam obtained is lowered in elongation, or the shape retainability during heat molding such as vacuum molding is lowered, making it undesirably difficult to obtain a good molded product.

If a polypropylene based resin is used as the polyolefin based resin (A) in the present invention, it is generally propylene homopolymer obtained by a Ziegler catalyst or a random or block copolymer of polypropylene with preferably 2 to 35 wt%, more preferably 3 to 20 wt%, of ethylene or of an α-olefin having 4 to 12 carbon atoms in its molecule. If the amount of comonomer is less than 2%, the impact or vibration absorbing effect is not enough. On the other hand, if the amount is more than 35 wt%, although it is preferable for controlling crosslinking, impact absorbability, resilience and cushionability the melting point becomes too low. The polypropylene based resin used in the invention has a melting point of 125 to 165°C, more preferably 130 to 155°C, and an MFR preferably of 0.5 to 20 g/10 min, more preferably 1.0 to 10 g/10 min. If the melting point is below 125°C, heat resistance may be too low, and if the melting point is over 165°C, shear-induced heat at manufacturing may cause decomposition of the foaming agent and brings about large voids which are not preferred. If the MFR is less than 0.5 g/10 min, too high a melt viscosity may result and this causes shear-induced heat, decomposition of foaming and undesirably large voids in the foam. On the other hand, if the MFR is more than 20 g/10 min, although it is preferable for sheet manufacturing, the elongation of the foam tends to be too low, and on molding at high temperature, the sheet tends to deform and it is difficult to maintain good quality.

The ethylene or an α-olefin with 4 to 12 carbon atoms to be copolymerized is not especially limited, and can be ethylene, butene or hexene respectively alone, or ethylene and butene, or ethylene and hexene respectively in combination, etc. In view of the mechanical strength of the foam, a copolymer having as large a number of carbon atoms as possible and a ternary copolymer are preferred. The amount of the ethylene or an α-olefin with 4 to 12 carbon atoms to be copolymerized is preferably 2 to 35 wt%, preferably 3 to 8 wt%. If the amount is less than 2 wt%, the crystallinity of the resin is very high, making it undesirably difficult to control the impact absorbability and vibration absorbability contrary to the intention of the present invention. Furthermore, since the melting point becomes high, the foam obtained is hard, to be lowered in cushionability, large in impact resilience, and poor in impact resistance at low temperature, and when the sheet to be foamed is produced, the foaming agent is liable to be decomposed by shear heat generation, to form undesirably coarse bubbles. On the other hand, if the amount is more than 35 wt%, the melting point may be lowered undesirably to lower heat resistance, even though a large amount is preferable for the control of the degree of crosslinking, cushionability, impact resilience and impact resistance. The melting point of the resin is preferably 125 to 155°C, more preferably 130 to 145°C. If the melting point is lower than 125°C, the foam obtained is undesirably limited in application in view of its poor heat resistance. If higher than 155°C, the melting point is higher to widen desirably the range of application, but the shear heat generation during the production of the sheet to be foamed is liable to cause the foaming agent to be decomposed, thereby undesirably forming coarse bubbles. The MFR is preferably 0.5 to 20 g/10 min, more preferably 1.0 to 10 g/10 min. If the MFR is less than 0.5 g/10 min, the melt viscosity of the resin is so high that it is liable to cause the foaming agent to be undesirably decomposed, thereby forming coarse bubbles by the shear heat generation during the production of the sheet to be foamed. On the other hand, if more than 20 g/10 min, although the melt viscosity is desirably low for the production of the sheet, the foam obtained is lowered in elongation, or the shape retainability during heat molding such as vacuum molding is lowered, making it undesirably difficult to obtain a good molded product.

Usually, polypropylene based resin tends to decompose at the tertiary carbon atom of polypropylene when irradiated by ionizing irradiation such as electron beam. This decomposition may be prevented by adding to the composition to be foamed monomer (which may be a dimer) having two or more reactive double bonds in its molecule, preferably in an amount of 0.5 to 5 weight parts relative to 100 weight parts of the propylene based resin and which serves as a crosslinking agent for the propylene based resin. If the amount is less than 0.5 wt parts, crosslinking degree must substantially depend upon the reactivity of the diene based polymer and accordingly cannot be high enough. On the other hand, if the amount is more than 5 wt parts, a uniform crosslinked product is difficult to obtain because of the difference in speed of the two crosslinking reactions.

When a mixture of polyethylene based resin (a) and polypropylene based resin (b) is used as resin (A) of this invention, the ratio (a)/(a+b) of 0.2 to 0.8 is preferable having regard to controlling softness, heat resistance, vibration absorbability and impact absorbability.

The mixing ratio (B)/(A+B) of polyolefin based resin (A) and conjugated diene based polymer (B) or its hydrogenated product is preferably 0.1 to 0.5, more preferably 0.2 to 0.4. If (B)/(A+B) is less than 0.1, the crystallinity the polyolefin based resin may bring about high rigidity, heat resistance, but with low impact and vibration absorbability and cushionability. On the other hand, if more than 0.5, although the reason is unknown, impact absorbability and vibration absorbability are not greatly improved, and rather, mechanical properties such as strength are undesirably lowered due to the increased amorphous component.

The number average molecular weight of the diene based polymer is preferably 30,000 to 500,000. If it is less than 30,000, although it is preferable for good vibration absorbability, the resin is too liquid and causes too low a melt viscosity of the compound; accordingly, it becomes difficult to form a continuous sheet or to prevent blocking. On the other hand, if it is more than 500,000, shear-induced heat at melting causes uncontrollable decomposition of foaming agent.

The degree of crosslinking of the foam of the present invention is 15 to 70%, more preferably 25 to 70%, especially 30 to 60%. Crosslinking degrees of less than 15% are preferable having regard to elongation and moldability, but undesirable because the foam gas is liable to dissipate from the surface of the foam during foaming at such low degrees of crosslinking, not allowing the intended expansion ratio to be obtained, also to roughen the surface of the foam, and furthermore, to lower undesirably the heat resistance. On the other hand, degrees of crosslinking higher than 70% are preferable having regard to impact absorbability, vibration absorbability, mechanical strength and heat resistance of the conjugated diene polymer as a rubber component, but since the crosslinking points increase substantially to lower moldability, molding into various shapes cannot be effected.

The expansion ratio of a foam of the present invention is preferably 2 to 40 times, more preferably 5 to 40, especially 5 to 30 times. Expansion ratios less than 2 times are preferable having regard to vibration absorbability, mechanical strength and moldability, but undesirable because the foam obtained is hard and low in impact absorbability and cushionability. On the other hand, expansion ratios of more than 40 times are preferable having regard to cushionability due to higher flexibility, but undesirable because mechanical strength and moldability are lowered, and also because vibration absorbability is lowered (though the reason for this is unknown).

The impact resilience in terms of which impact absorbability of a foam of the present invention is expressed is preferably 10 to 50%, more preferably 15 to 35%, at 25°C. Impact resilience values of less than 10 are preferable having regard to impact absorbability, but the foam obtained is not firm and cannot hold its shape. On the other hand, impact resilience values of higher than 50% are preferable in view of moldability since the foam obtained can hold its shape, but undesirable since the repulsion against impact increases to lower undesirably impact absorbability.

The vibration absorbability at 20°C (C/Cc) of a foam of the present invention is preferably 0.1% or more. If the vibration absorbability is less than 0.1%, then when the foam is used with a wide range of materials to make composite products, it cannot give good vibration absorbability, i.e., damping effect. The upper limit of vibration absorbability is about 1.5%, above which the foam obtained is not particularly firm and may not hold its shape.

The foam of the present invention preferably has a moldability (L/D) of 0.4 or more, more preferably 0.5 to 0.9 within the desired range of degrees of crosslinking. If the moldability is less than 0.4, a product of complicated shape cannot be obtained and this undesirably restricts the molding method and molding design. On the other hand, although larger L/D values are preferable having regard to the degree of freedom in the molding method and molding design, generally the upper limit of L/D can be said to be about 0.9 having regard to the shape moldability and cushionability of the molded product.

In addition, as required, a thermal stabilizer, weather resistant material, flame retarding agent, flame retarding auxiliary, dispersing agent, pigment, and filler can be added. The thermal stabilizer can be selected from hindered phenol based stabilizers and thio based stabilizers, and should the foam be likely to come into contact with a metallic, especially a copper, plate, it is preferable to add a compound capable of preventing, as far as possible, damage which might otherwise be caused by such contact with metal. It is also effective to add 5 to 30 wt parts of micro particles, such as of talc, calcium carbonate, mica or carbon to the resin composition relative to 100 wt parts of the resin composition to improve vibration absorbability. In view of recent environmental issues, the use of olefins as raw materials is increasing, and depending on the places where the foam is to be used, a flame retarding agent or flame retarding auxiliary may need to be added. For the crosslinked foam, the use of a flame retarding agent having a melting point of 180 to 240°C, above all, a phosphorus halogen based flame retarding agent, is desirable.

The decomposition type foaming agent which can be applied in the present invention can be selected from various organic and inorganic foaming agents. Organic foaming agents include azodicarbonamide, N,N'-dinitrosopentamethylenetetramine, p,p'-hydroxybenzenesulfonyl hydrazide, triazol type or tetrazol type foaming agents having a chlorine atom, and inorganic foaming agents include sodium carbonate, ammonium carbonate, ammonium bicarbonate and calcium azide. Among these, a mixture of azodicarbonamide and N,N'-dinitrosopentamethylenetetramine is especialiy preferred because then decomposition of the resin compound can be minimized since uniform foaming from low temperature is achieved. Azoditetrazol guanidine can also be used instead of N,N'-dinitrosopentamethylenetetramine for the same purpose.

In the present invention, crosslinking by irradiation with ionizing radiation is preferable. Alternatively, especially when component (A) is a polyethylene based resin, it is possible to employ a chemical crosslinking method, in which a peroxide compound such as dicumyl peroxide, t-butyl perbenzoate or di-tertiary butyl peroxide is added, preferably in an amount of 0.5 to 5 parts by weight of component (A), to the resin mixture for crosslinking. However, this method is less preferred because it may cause deterioration of the polyolefin based resin and affords less control of crosslinking.

The foaming method of the present invention can be a known method, but a continuous sheet, such as vertical hot air foaming, horizontal hot air foaming or horizontal chemical solution foaming is preferable.

An especially preferred embodiment of the method for producing the polyolefin based electron beam crosslinked foam of the present invention is described below.

Fifty kilograms of (A), a high pressure process low density polyethylene (0.925 g/cm$^3$ density, 112°C melting point and 4.8 g/10 min MFR), 30 kg of (B), a partially hydrogenated styrene-isoprene-styrene block copolymer having a peak tan δ value at -3°C, a number average molecular weight of 55,000 and a styrene content of 10%, 0.3 kg of Irganox 1010 as a thermal stabilizer and 6.5 kg of azodicarbonamide as a decomposition type foaming agent were put into a Henschel mixer of 450 liters inner capacity, and mixed, to obtain a composition. The raw mixture was introduced into a vent-type extruder heated to a temperature not decomposing the foaming agent, specifically 130 to 150°C, and extruded from a 3 mm bore nozzle thereof into a water cooling tank, and the strand gut was drawn out of the water cooling tank, exposed to compressed air for draining, and introduced into a pelletizer, to be pelletized into pellets of 2 mm diameter and 3 mm length obtained as a raw material for the sheet to be foamed. The raw material was introduced into an extruder heated at 130 to 150°C, and extruded from its nozzle, and the extruded material was fed into a polishing type sheet molding machine at a roll temperature of 65°C. The molded sheet was wound as a 3.0 mm thick and 500 mm wide continuous sheet free from bubbles caused by entrained air.

The sheet was irradiated with an electron beam, to be crosslinked so as to render it suitable for foaming, i. e., in order that the degree of crosslinking of the foam obtained might be 15 to 80%. The sheet was continuously supplied onto a heating medium bath heated in a temperature range from 30 to 100°C higher than the decomposition temperature of the foaming agent, to be foamed.

The foam thus obtained was 6.1 mm in thickness, 1300 mm in width and 25 times in expansion ratio, and smooth on the surface.

As described above, in the present invention, a specific conjugated diene based polymer is mixed with a polyethylene based resin, and the mixture is crosslinked and foamed into a product decreased in impact resilience attributable to the crystallinity of the polyolefin based resin, yet with the properties of the polyolefin based resin maintained over a wide range of degrees of crosslinking and excellent in cushionability, impact absorbability and vibration absorbability.

The reason why the effects of the present invention are obtained is not fully understood Although not wishing to be bound by theory, according to the experience of the inventors, when a conventional rubber resin is mixed with a polyolefin based resin, the amount of the rubber resin added must be not less than the amount of the polyolefin based resin, in order that the properties of the rubber resin should manifest themselves, and therefore, it is very difficult to maintain the properties of the polyolefin based resin. On the other hand, a polyethylene based resin copolymerized with a rubber component, for example, EVA resin can be further lowered in crystallinity by a small amount of the copolymerized rubber component, to be made flexible, but the impact absorbability and vibration absorbability are not satisfactory. In the present invention, it is surmised that since a specific conjugated diene based polymer resin and a polyolefin based resin are mixed, crosslinked and foamed, the resins are crosslinked with each other in a state such that the conjugated diene based polymer resin and the polyolefin based resin appear to have been copolymerized, and so that the amount of the conjugated diene based polymer resin added can be smaller, to give impact absorbability and vibration absorbability without impairing the basic properties of the polyolefin based resin.

Since the foam of the present invention is small in impact resilience, it is excellent in impact absorbability, and also vibration absorbability. Therefore, if it is stuck to various facings for use as interior materials of automobiles, the interior materials obtained will have peculiar softness, impact absorbability, and delicate vibration absorbability with a damping effect which cannot be achieved by conventional foams. Furthermore, since it is excellent in vibration absorbability, it can be stuck to inflammable material such as iron sheet, for use as molded engine room partitions, or can also be stuck to an inorganic fiber mat for use as a lining material for inflammable board. It can also be stuck to a metallic sheet, to form a laminate which can be folded for use as an outside plate of, for example, a washing machine. It can also be stuck to a plastic sheet, to form a laminate which can be molded for use as a cover of, for example, washing machine, in which it serves as a damping composite material to absorb vibration. Alternatively, it can form part of a composite with a vibration absorbing sheet which comprises rubber or polyvinylchloride and metal particles, for absorbing low frequency. The foam can also be coated with an adhesive at least on one side, for use as a tape for damping the vibration of, for example, windows. It can also be laminated with, for example, plywood, for use as a floor damping material. It can also be used to make composite materials with, for example metallic foil, film or inorganic fibers, for application in various molding areas.

Methods for measuring physical properties and parameters relevant to the present invention are as follows.

(1) Degree of Crosslinking

A foam was shredded, and 0.2 g of it was accurately weighed. It was immersed in tetralin at 130°C, and with stirring, the mixture was heated for 3 hours, to dissolve what could be dissolved. The insoluble portion was taken out and washed by acetone, to remove tetralin, and washed by pure water to remove acetone. Water was removed by a hot air dryer at 120°C. The residue was naturally cooled to room temperature, and weighed as $W_1$ (g), to obtain the degree of crosslinking from the following formula:

$$\text{Crosslinking degree} = [(0.2 - W_1)/0.2] \times 100 \, (\%)$$

(2) Expansion ratio

A 10 x 10 cm sample was cut out of the foam, and its thickness $t_1$ (cm) and weight $W_2$ (g) were measured. The expansion ratio, E, is the ratio of the volume per unit mass of expanded foam/unexpanded material. Given that the densities of polyethylene and polypropylene are roughly 1 g/cm$^3$, this approximates to: Expansion ratio, E (10 x 10 x $t_1$)/$W_2$ (dimensionless).

(3) Melting point

The largest peak in the melt heat absorption curve measured by a differential scanning calorimeter (DSCII produced by Perkin Elma) was identified as the melting point.

(4) MFR (melt flow rate)

Polyethylene based resins were measured according to JIS K 6760.

(5) Dynamic viscoelasticity

The viscoelastic spectrum of "Leovibron" (produced by Orientec) DDV-III was measured, and the peak temperature of the spectral curve was identified as the absorption peak of tan $\delta$.

(6) Impact absorbability

The value measured by means of a "Luepke" impact resilience measuring instrument (measuring temperature 25°C) was used.

(7) Vibration absorbability

A complex elastic modulus measuring instrument was used to measure the damping coefficient ratio C/Cc of viscous damping coefficient C to critical viscous damping coefficient Cc of a steel plate (1 mm thick, 15 mm x 250 mm) only. A sample of the same size was stuck to the steel plate, and the laminate was held as a cantilever at a fixing compression rate of 75% (the thickness of the compressed sample to the thickness of the original entire sample including the thickness of the steel plate), to measure C/Cc. The value of the steel plate only was subtracted from the value obtained from the laminate consisting of the sample and the steel plate to provide the vibration absorbability. Measurements were taken at 20°C.

(8) Cushionability

The compressive hardness measured according to JIS K 6767 was used as an indicator of cushionability. A cushionability in a range from 0.30 to 1.2 kg/cm$^2$ was acceptable.

(9) Moulding processability (L/D)

Cylindrical metal moulds of which the depth (L)/diameter (D) ratio varies at intervals of 0.05 are used. A foam is vacuum-moulded at 160 to 180°C by means of a vacuum moulding machine. The maximum ratio at which the foam forms a moulding without any breaks is taken as the mould processability.
Especially preferred embodiments of the present invention are now described in more detail below with reference to the following Examples.

Example 1

Fifty kilograms of high pressure process low density polyethylene powder (0.925 g/cm$^3$ density, 113°C melting point and 4.3 g/10 min MFR), 25 kg of a partially hydrogenated styrene-isoprene-styrene block copolymer resin having a peak tan δ value at -3°C, a number average molecular weight of 55,000 and a styrene content of 10%, 0.5 kg of Mark A030 and 1.0 kg of DSTDP as thermal stabilizers, and 8 kg of azodicarbonamide as a decomposition type foaming agent were put into a Henschel mixer of 450 liters inner capacity, and mixed. The mixture was introduced into a vent type extruder heated to a temperature not decomposing the foaming agent, specifically 130 to 140°C, and extruded from its T die as a sheet. The sheet was wound as a 2.0 mm thick 450 mm wide continuous sheet free from bubbles caused by entrained air.

The sheet was irradiated with an electron beam of 3.5 Mrad, to be crosslinked. The sheet was introduced into a foaming apparatus utilizing the silicon chemical solution method and heated to 205°C, 215°C and 220°C in this order, to be foamed, and the continuous sheet-like foam obtained was wound.

The foam was made into a product having a degree of crosslinking of 23%, an expansion ratio of 25 times, a thickness of 4.2 mm and a width of 1250 mm.

The properties of the product are shown in Table 5.

As shown in the Table, the foam, which was within the present invention, was a polyolefin based electron beam crosslinked foam excellent in impact absorbability and vibration absorbability.

Examples 2 to 5, and Comparative Examples 1 to 4

The ingredients as shown in Tables 1 to 4 were used to obtain foams, and the properties of the foams as shown in Table 5.

The polyolefin based electron beam crosslinked foams embodying the present invention and shown in the Examples were excellent in impact absorbability and vibration absorbability over a wide range of degrees of crosslinking since they were prepared by mixing a polyolefin based resin and a conjugated diene based polymer with a specific dynamic viscoelasticity, and crosslinking and foaming the mixture.

On the other hand, the polyolefin based electron beam crosslinked foams prepared according to any conventional method or not in conformity with the present invention shown as Comparative Examples were insufficient in impact absorbability and vibration absorbability, because improper resins and other materials were used.

TABLE 1

| Example | Polyolefin based resin (A) | | Conjugated diene based polymer (B) | Mixing ratio (by weight) | |
|---|---|---|---|---|---|
| | Polyethylene based resin (a) | Polypropylene based resin (b) | | $\frac{(B)}{(A+B)}$ | $\frac{(a)}{(a+b)}$ |
| 1 | LDPE density 0.925g/cm³ Mp: 113°C MFR: 4.3 g/10 min | | Hydrogenated(75%) SIS Styrene content: 10% Molecular weight: 55,000 tanδ peak temperature: -3°C | 0.33 | |
| 2 | EVA VA content 15% Mp: 83°C MFR: 5.0g/10 min | | SIS block copolymer Styrene content: 10% Molecular weight: 50,000 tanδ peak temperature: 2°C | 0.20 | |
| 3 | | R-EPC Ethylene content: 4.8% Mp: 138°C MFR: 1.5g/10 min | Hydrogenated(75%) SIS Styrene content: 10% Molecular weight: 55,000 tanδ peak temperature: -3°C | 0.40 | |
| 4 | LDPE density 0.925g/cm³ Mp: 113°C MFR: 4.3 g/10 min | B-EPC Ethylene content: 10% Mp: 150°C MFR: 4.2g/10 min | SI copolymer Styrene content: 10% Molecular weight: 170,000 tanδ peak temperature: 30°C | 0.50 | 0.60 |
| 5 | EVA VA content 15% Mp: 83°C MFR: 5.0g/10 min | R-EPC Ethylene content: 2.3% Mp: 145°C MFR: 3.5g/10 min | Hydrogenated(75%) SIS Styrene content: 10% Molecular weight: 55,000 tanδ peak temperature: -3°C | 0.15 | 0.40 |

LDPE: High pressure process low density polyethylene
EVA: Ethylene-vinyl acetate copolymer
R-EPC: Ethylene-propylene random copolymer
B-EPC: Ethylene-propylene block copolymer

SIS: Styrene-isoprene-styrene block copolymer
SI: Styrene-isoprene copolymer
L-LDPE: Linear high pressure process low density polyethylene
EPDM: Ethylene-propylene-diene copolymer

TABLE 2

| Example | Foaming agent | Sheet dimensions | Crosslinking method | Foaming method | Thickness and width of foam |
|---|---|---|---|---|---|
| 1 | Azodicarbonamide 12 wt parts | 1.7mm thick 430mm width | Electron beam irradiation 9 Mrad | Horizontal chemical liquid | 4.0mm thick 1200mm width |
| 2 | Azodicarbonamide 6 wt parts | 1.75mm thick 480mm width | Electron beam irradiation 12 Mrad | Horizontal chemical liquid | 3.5mm thick 1080mm width |
| 3 | Azodicarbonamide 10 wt parts | 1.50mm thick 500mm width | Electron beam irradiation 8 Mrad | Vertical flow of hot air | 3.0mm thick 1280mm width |
| 4 | Azodicarbonamide 5 t parts Dinitrosopenta-methylene tetramine 0.5 wt parts | 1.75mm thick 550mm width | Electron beam irradiation 10.9 Mrad | Horizontal chemical liquid | 3.2mm thick 1000mm width |
| 5 | Azodicarbonamide 8 wt parts | 1.85mm thick 520mm width | Electron beam irradiation 13 Mrad | Vertical flow of hot air | 4.0mm thick 1150mm width |

TABLE 3

| Comparative Example | Polyolefin based resin (A) | | Conjugated diene based polymer (B) | Mixing ratio (by weight) | |
| --- | --- | --- | --- | --- | --- |
| | Polyethylene based resin (a) | Polypropylene based resin (b) | | $\frac{(B)}{(A)+(B)}$ | $\frac{(a)}{(a)+(b)}$ |
| 1 | LDPE<br>density 0.925g/cm³<br>Mp: 113°C<br>MFR: 4.3 g/10 min | R-EPC<br>Ethylene content: 2.3%<br>Mp: 145°C<br>MFR: 3.5g/10 min | | 0.00 | 0.8 |
| 2 | L-LDPE<br>density: 0.935g/cm³<br>Mp: 125°C<br>MFR: 5.0g/10 min | | SIS<br>Styrene content: 10%<br>Molecular weight: 50,000<br>tanδ peak temperature: 2°C | 0.20 | 1.0 |
| 3 | L-LDPE<br>density: 0.935g/cm³<br>Mp: 125°C<br>MFR: 5.0g/10 min | | EPDM<br>Ethylene content: 10%<br>Molecular weight: 65,000<br>tanδ peak temperature: -35°C | 0.50 | 0 |
| 4 | EVA copolymer<br>VA content 15%<br>Mp: 83°C<br>MFR: 5.0g/10 min | R-EPC<br>Ethylene content: 2.3%<br>Mp: 145°C<br>MFR: 3.5g/10 min | Hydrogenated(100%) SIS<br>Styrene content: 10%<br>Molecular weight: 55,000<br>tanδ peak temperature: -3°C | 0.15 | 0.10 |

LDPE: High pressure process low density polyethylene
EVA: Ethylene-vinyl acetate copolymer
R-EPC: Ethylene-propylene random copolymer
B-EPC: Ethylene-propylene BLOCK copolymer

SIS: Styrene-isoprene-styrene block copolymer
SI: Styrene-isoprene copolymer
L-LDPE: Linear high pressure process low density polyethylene
EPDM: Ethylene-propylene-diene copolymer

EP 0 726 290 B2

TABLE 4

| Comparative Example | Foaming agent | Sheet dimensions | Crosslinking method | Foaming method | Thickness and width of foam |
|---|---|---|---|---|---|
| 1 | Azodicarbonamide 12 wt parts | 1.7mm thick 430mm width | Electron beam irradiation 9 Mrad | Horizontal chemical liquid | 4.0mm thick 1200mm width |
| 2 | Azodicarbonamide 6 wt parts | 1.75mm thick 480mm width | Electron beam irradiation 12 Mrad | Horizontal chemical liquid | 3.5mm thick 1080mm width |
| 3 | Azodicarbonamide 10 wt parts | 1.50mm thick 500mm width | Electron beam irradiation 8 Mrad | Vertical flow of hot air | 3.0mm thick 1280mm width |
| 4 | Azodicarbonamide 8 wt parts | 1.85mm thick 520mm width | Electron beam irradiation 13 Mrad | Vertical flow of hot air | 4.0mm thick 1150mm width |

## TABLE 5

| | Crosslinking degree (%) | Expansion ratio (times) | Impact absorbability (%) | Vibration absorbability (%) | Moldability (L/D) |
|---|---|---|---|---|---|
| Example 1 | 30 | 7 | 40 | 0.3 | 0.85 |
| 2 | 45 | 12 | 38 | 0.15 | 0.76 |
| 3 | 55 | 5 | 30 | 0.4 | 0.62 |
| 4 | 35 | 7 | 35 | 0.46 | 0.76 |
| 5 | 40 | 9 | 24 | 0.39 | 0.68 |
| Comparative Example 1 | 55 | 2.5 not well-foamed | 78 | 0.44 | 0.42 |
| 2 | 80 | 3.5 not well-foamed | 64 | 0.05 | 0.22 |
| 3 | 20 | 4 | 58 | 0.08 | 0.80 |
| 4 | 35 | 35 | 69 | 0.04 | 0.80 |

Comparative Examples 1 and 2 could not form the intended foam due to voids (coarse bubbles) attributable to the excessive crosslinking degree.

EP 0 726 290 B2

**Claims**

1. A crosslinked foam comprising a polyolefin based resin (A), said polyolefin based resin (A) comprising a polypropylene based resin having a melting point of 125 to 165°C and/or a polyethylene based resin having a melting point of 70 to 135°C, and per 100 parts by weight of the polyolefin based resin (A), from 10 to 100 parts by weight of a conjugated diene polymer (B) having a peak tan δ value (obtained by dynamic viscoelasticity measurement) at a temperature between -20°C and 40°C inclusive, said foam having a degree of cross-linking of 15 to 70% wherein the degree of cross-linking is measured by heating a weighed sample in tetralin at 130°C for 3 hours.

2. A foam according to claim 1 having an impact absorbability at 25°C (as measured by an impact resilience measuring instrument) of from 10 to 50% and a vibration absorbability at 20°C, as defined by the damping coefficient ratio (C/Cc), of at least 0.1%, wherein the vibration absorbability is measured using a complex elastic modulus measuring instrument to measure the damping coefficient ratio C/Cc of viscous damping coefficient C to critical viscous damping coefficient ratio Cc using a laminate of a steel plate (1 mm thick, 15 mm x 250 mm) and a sample of the same size adhered thereto.

3. A foam according to claim 1 or claim 2, wherein the polypropylene based resin has a MFR (melt flow rate measured in accordance with JIS K6760) of 0.5 to 20 g/10 min.

4. A foam according to any preceding claim, wherein the polypropylene based resin is a copolymer of propylene with 2 to 35 wt% of a comonomer selected from ethylene and an α-olefin having 4 to 12 carbon atoms

5. A foam according to any preceding claim, wherein the polyethylene based resin has a MFR (melt flow rate measured in accordance with JIS K6760) of 0.5 to 10 g/10 min.

6. A foam according to any preceding claim, wherein the polyolefin based resin (A) comprises a polyethylene based resin (a) and a polypropylene based rein (b) in a weight ratio, (a)/(a+b), of 0.2 to 0.8.

7. A foam according to any preceding claim, having an expansion ratio (E) of 2 to 40 times, where E is the ratio of volume per unit mass of expanded foam/unexpanded material.

8. A foam according to claim 8, wherein the degree of crosslinking is 25 to 70% and the expansion ratio is 5 to 40 times.

9. A foam according to any preceding claim, wherein the conjugated diene polymer comprises a styrene/isoprene block copolymer.

10. A foam according to any preceding claim, wherein the moldability (L/D) is 0.4 or more, wherein the moldability is the maximum ratio of depth (L)/diameter (D) of a cylindrical metal mould in which the foam forms a moulding without any breaks.

11. A foam according to any preceding claim, wherein the conjugated diene polymer has a number average molecular weight of 30,000 to 500,000.

12. A foam according to any preceding claim, which further comprises 0.5 to 10 parts by weight of (C) units derived from a crosslinking agent.

13. A foam according to any preceding claim, which is an electron beam crosslinked foam.

14. A crosslinked foam having an impact absorbability at 25°C (as measured by an impact resilience measuring instrument) of 10 to 50% and a vibration absorbability at 20°C (measured in accordance with the method detailed in claim 3), of at least 0.1%, which foam has a degree of cross-linking of 15 to 70% (measured by heating a weighed sample in tetralin at 130°C for 3 hours) and comprises:

   100 parts by weight of polyolefin based resin (A) comprising a polypropylene based resin having a melting point of 125 to 165°C and/or a polyethylene based resin having a melting point of 70 to 135°C;
   and
   10 to 100 parts by weight of a conjugated diene polymer (B) having a peak tan δ value (obtained by dynamic viscoelasticity measurement) at a temperature between -20°C and 40°C inclusive.

**15.** Use, as a cushion material for absorbing impact and vibration, of a crosslinked foam according to any preceding claim.

**16.** A method of manufacturing a crosslinked foam comprising

(a) mixing a polyolefin based resin (A) comprising a polypropylene based resin having a melting point of 125 to 165°C and/or a polyethylene based resin having a melting point of 70 to 135°C with a conjugated diene polymer (B) having a peak tan $\delta$ value (obtained by dynamic viscoelasticity measurement) at a temperature between -20°C and 40°C inclusive in an amount from 10 to 100 parts by weight of the conjugated diene polymer (B) per 100 parts by weight of the polyolefin based resin (A); and
(b) foaming and cross-linking the mixture such as to have a degree of cross-linking of 15 to 70% (Measured by heating a weighed sample in tetralin at 130°C for 3 hours).

**17.** A method according to claim 16, wherein the foam is crosslinked by electron beam curing.

**18.** A method according to claim 16 or claim 17, which comprises the additional step of incorporating in the said mixture of components (A) and (B) a crosslinking agent (C).

**19.** A method according to claim 18, wherein the crosslinking agent (C) is incorporated in the said mixture in an amount of from 0.1 to 10% by weight of components (A), (B) and (C).

**20.** A method according to claim 19, wherein component (A) comprises a polypropylene based polymer and the crosslinking agent is a polyfunctional ethylenically unsaturated monomer.

**Patentansprüche**

**1.** Vernetzter Schaum, umfassend ein Harz auf Polyolefin-Basis (A), wobei das Harz auf Polyolefin-Basis (A) ein Harz auf Polypropylen-Basis mit einem Schmelzpunkt von 125 bis 165 °C und/oder ein Harz auf Polyethylen-Basis mit einem Schmelzpunkt von 70 bis 135 °C umfasst, und pro 100 Gewichtsteile des Harzes auf Polyolefin-Basis (A) 10 bis 100 Gewichtsteile eines konjugierten Dien-Polymers (B), das einen (durch dynamische Viskoelastizitätsmessung erhaltenen) tan$\delta$-Spitzenwert bei einer Temperatur zwischen -20 °C und 40 °C (Grenzen eingeschlossen) aufweist, wobei der Schaum einen Vernetzungsgrad von 15 bis 70 % aufweist, wobei der Vernetzungsgrad durch dreistündiges Erhitzen einer gewogenen Probe in Tetralin auf 130 °C gemessen wird.

**2.** Schaum nach Anspruch 1, der ein (mit einem Stoßelastizitätsmessinstrument gemessenes) Stoßabsorptionsvermögen bei 25 °C von 10 bis 50 % und ein durch das Dämpfungskoeffzientenverhältnis (C/Cc) definiertes Schwingungsdämpfungsvermögen bei 20 °C von zumindest 0,1 % aufweist, wobei das Schwingungsdämpfungsvermögen unter Verwendung eines komplexen Elastizitätsmodul-Messinstruments gemessen wird, um das Dämpfungskoeffizientenverhältnis (C/Cc) zwischen dem Viskositätsdämpfungskoeffizienten C und dem kritischen Viskositätsdämpfungskoeffizienten Cc unter Verwendung eines Laminats aus einer Stahlplatte (1 mm Dicke, 15 mm x 250 mm), auf das eine Probe der gleichen Größe aufgeklebt ist, zu messen.

**3.** Schaum nach Anspruch 1 oder 2, worin das Harz auf Polypropylenbasis eine MFR (gemäß JIS K6760 gemessene Schmelzflussrate) von 0,5 bis 20 g/10 min aufweist.

**4.** Schaum nach einem der vorangegangenen Ansprüche, worin das Harz auf Polypropylen-Basis ein Copolymer von Propylen mit 2 bis 35 Gew.-% eines Comonomers, ausgewählt aus Ethylen und einem $\alpha$-Olefin mit 4 bis 12 Kohlenstoffatomen, ist.

**5.** Schaum nach einem der vorangegangenen Ansprüche, worin das Harz auf Polyethylen-Basis eine MFR (gemäß JIS K6760 gemessene Schmelzflussrate) von 0,5 bis 10 g/10 min aufweist.

**6.** Schaum nach einem der vorangegangenen Ansprüche, worin das Harz auf Polyolefin-Basis (A) ein Harz auf Polyethylen-Basis (a) und ein Harz auf Polypropylen-Basis (b) in einem Gewichtsverhältnis (a)/(a+b) von 0,2 bis 0,8 umfasst.

**7.** Schaum nach einem der vorangegangenen Ansprüche, der ein Expansionsverhältnis (E) vom 2- bis 40fachen aufweist, wobei E das Verhältnis des Volumens pro Masseneinheit zwischen expandiertem Schaum und ungeschäumtem Material ist.

8. Schaum nach Anspruch 7, worin der Vernetzungsgrad 25 bis 70 % und das Expansionsverhältnis das 5- bis 40fache beträgt.

9. Schaum nach einem der vorangegangenen Ansprüche, worin das konjugierte Dien-Polymer ein Styrol/Isopren-Blockcopolymer ist.

10. Schaum nach einem der vorangegangenen Ansprüche, worin die Formbarkeit (UD) 0,4 oder mehr beträgt, wobei die Formbarkeit das maximale Verhältnis von Tiefe (L) zu Durchmesser (D) einer zylindrischen Metallform ist, in der der Schaum einen Formkörper ohne jegliche Risse bildet.

11. Schaum nach einem der vorangegangenen Ansprüche, worin das konjugierte Dien-Polymer ein zahlenmittleres Molekulargewicht von 30.000 bis 500.000 aufweist.

12. Schaum nach einem der vorangegangenen Ansprüche, der weiters 0,5 bis 10 Gewichtsteile an von einem Vernetzer herrührenden Einheiten (C) umfasst.

13. Schaum nach einem der vorangegangenen Ansprüche, der ein durch Elektronenstrahl vernetzter Schaum ist.

14. Vernetzter Schaum, der ein (mit einem Stoßelastizitätsmessinstrument gemessenes) Stoßabsorptionsvermögen bei 25 °C von 10 bis 50 % und ein (nach dem in Anspruch 3 dargelegten Verfahren gemessenes) Schwingungsdämpfungsvermögen bei 20 °C von zumindest 0,1 % aufweist, wobei der Schaum einen (durch dreistündiges Erhitzen einer gewogenen Probe in Tetralin auf 130 °C gemessenen) Vernetzungsgrad von 15 bis 70 % aufweist und Folgendes umfasst:

100 Gewichtsteile Harz auf Polyolefin-Basis (A), das ein Harz auf Polypropylen-Basis mit einem Schmelzpunkt von 125 bis 165 °C und/oder ein Harz auf Polyethylen-Basis mit einem Schmelzpunkt von 70 bis 135 °C aufweist; und
10 bis 100 Gewichtsteile eines konjugierten Dien-Polymers (B) mit einem (durch dynamische Viskoelastizitätsmessung erhaltenen) tanδ-Spitzenwert bei einer Temperatur zwischen -20 °C und 40 °C (Grenzen eingeschlossen).

15. Verwendung eines vernetzten Schaums nach einem der vorangegangenen Ansprüche als Dämpfungsmaterial zum Absorbieren von Stößen und Schwingungen.

16. Verfahren zur Herstellung eines vernetzten Schaums, Folgendes umfassend:

(a) das Vermischen eines Harzes auf Polyolefin-Basis (A), das ein Harz auf Polypropylen-Basis mit einem Schmelzpunkt von 125 bis 165 °C und/oder ein Harz auf Polyethylen-Basis mit einem Schmelzpunkt von 70 bis 135 °C umfasst, mit einem konjugierten Dien-Polymer (B) mit einem (durch dynamische Viskositätsmessung erhaltenen) tanδ-Spitzenwert bei einer Temperatur zwischen -20 °C und 40 °C (Grenzen eingeschlossen) in einer Menge von 10 bis 100 Gewichtsteilen des konjugierten Dien-Polymers (B) pro 100 Gewichtsteile des Harzes auf Polyolefin-Basis (A); und
(b) das Schäumen und Vernetzen des Gemischs, so dass es einen (durch dreistündiges Erhitzen einer gewogenen Probe in Tetralin auf 130 °C gemessenen) Vernetzungsgrad von 15 bis 70 % aufweist.

17. Verfahren nach Anspruch 16, worin der Schaum mittels Elektronenstrahlhärtung vernetzt wird.

18. Verfahren nach Anspruch 16 oder 17, das den zusätzlichen Schritt des Aufnehmens eines Vernetzers (C) in das Gemisch aus den Komponenten (A) und (B) umfasst.

19. Verfahren nach Anspruch 18, worin der Vernetzer (C) in das Gemisch in einer Menge von 0,1 bis 10 Gew.-%, bezogen auf das Gewicht der Komponenten (A), (B) und (C), miteinbezogen wird.

20. Verfahren nach Anspruch 19, worin Komponente (A) ein Polymer auf Polypropylen-Basis umfasst und der Vernetzer ein polyfunktionelles ethylenisch ungesättigtes Monomer ist.

**Revendications**

1. Mousse réticulée comprenant une résine à base de polyoléfine (A), ladite résine à base de polyoléfine (A) comprenant une résine à base de polypropylène ayant un point de fusion de 125 à 165°C et/ou une résine à base de polyéthylène ayant un point de fusion de 70 à 135°C, et pour 100 parties en poids de la résine à base de polyoléfine (A), de 10 à 100 parties en poids d'un polymère diène conjugué (B) ayant une valeur de tan δ de pointe (obtenue par mesure de visco-élasticité dynamique) à une température entre - 20 et 40°C inclus, ladite mousse ayant un degré de réticulation de 15 à 70 %, où le degré de réticulation est mesuré en chauffant un échantillon pesé dans la tétraline à 130°C pendant 5 heures.

2. Mousse selon la revendication 1, ayant une absorbabilité à l'impact à 25°C (mesurée par un instrument de mesure de la résilience à l'impact) de 10 à 50 % et une absorbabilité des vibrations à 20°C, définie par le rapport des coefficients d'amortissement (C/Cc) d'au moins 0,1 %, où l'absorbabilité des vibrations est mesurée en utilisant un instrument de mesure du module élastique complexe pour mesurer le rapport des coefficients d'amortissement C/Cc du coefficient d'amortissement visqueux C au coefficient d'amortissement visqueux critique Cc en utilisant un stratifié d'une plaque d'acier ( (1 mm d'épaisseur, 15 mm x 250 mm) et un échantillon de la même dimension qui lui adhère.

3. Mousse selon la revendication 1 ou la revendication 2 où la résine à base de polypropylène a MFR (indice d'écoulement en phase fondue mesuré selon JIS K 6760) de 0,5 à 20 g/10 min.

4. Mousse selon toute revendication précédente où la résine à base de polypropylène est un copolymère de propylène avec 2 à 35 % en poids d'un comonomère sélectionné parmi l'éthylène et une α-oléfine ayant 4 à 12 atomes de carbone.

5. Mousse selon toute revendication précédente où la résine à base de polyéthylène a un débit en phase fondue selon JIS K 6760 de 0,5 à 10 g/10min.

6. Mousse selon toute revendication précédente où la résine à base de polyoléfine (A) comprend une résine à base de polyéthylène (a) et une résine à base de polypropylène (b) à un rapport pondéral, (a) / (a+b), de 0,2 à 0,8.

7. Mousse selon toute revendication précédente ayant un rapport d'expansion (E) de 2 à 40 fois, où E est le rapport du volume par masse unitaire de la mousse expansée / matière non expansée.

8. Mousse selon la revendication 8 où le degré de réticulation est de 25 à 70 % et le rapport d'expansion est de 5 à 40 fois.

9. Mousse selon toute revendication précédente où le polymère diène conjugué comprend un copolymère séquencé de styrène/isoprène.

10. Mousse selon toute revendication précédente où la moulabilité (L/D) est de 0,4 ou plus, où la moulabilité est le rapport maximum de profondeur (L) / diamètre (D) d'un moule en métal cylindrique dans lequel la mousse forme un moulage sans aucune rupture.

11. Mousse selon toute revendication précédente, où le polymère diène conjugué a un poids moléculaire en nombre de 30.000 à 500.000.

12. Mousse selon toute revendication précédente qui comprend de plusieurs 0,5 à 10 parties en poids d'unités (C) dérivées d'un agent réticulant.

13. Mousse selon toute revendication précédente qui est une mousse réticulée par un faisceau d'électrons.

14. Mousse réticulée ayant une absorbabilité de l'impact à 25°C (en mesurant par un instrument de mesure de résilience à l'impact) de 10 à 50 % et une absorbabilité des vibrations à 20°C (mesurée selon la méthode détaillée à la revendication 3), d'au moins 0,1 %, laquelle mousse a un degré de réticulation de 15 à 70 %, (mesuré en chauffant un échantillon pesé dans la tétraline à 130°C pendant 3 heures) et comprend:

   100 parties en poids de résine (A) à base de polyoléfine comprenant une résine à base de polypropylène ayant un point de fusion de 125 à 165°C et/ou une résine à base de polyéthylène ayant un point de fusion de 70 à 135°C;
et
10 à 100 parties en poids d'un polymère diène conjugué (B) ayant une valeur de tan δ de pointe (obtenue par mesure de visco-élasticité dynamique à une température entre - 20°C et 40°C inclus).

15. Utilisation, comme matériau d'amortissement pour absorber l'impact et les vibrations, d'une mousse réticulée selon toute revendication précédente.

16. Méthode de fabrication d'une mousse réticulée comprenant:

a) le mélange d'une résine à base de polyoléfine (A) comprenant une résine à base de polypropylène ayant un point de fusion de 125 à 165°C et/ou une résine à base de polyéthylène ayant un point de fusion de 70 à 135°C avec un polymère diène conjugué (B) ayant une valeur de tan δ de pointe (obtenue par mesure de visco-élasticité dynamique à une température entre - 20°C et 40°C inclus en une quantité de 10 à 100 parties en poids du polymère diène conjugué (B) pour 100 parties en poids de la résine à base de polyoléfine (A), et
b) La formation de mousse et la réticulation du mélange pour avoir un degré de réticulation de 15 à 70 % (mesuré en ayant un échantillon pesé dans la tétraline à 130°C pendant 3 heures).

17. Méthode selon la revendication 16, où la mousse est réticulée par durcissement avec un faisceau d'électrons.

18. Méthode selon la revendication 16 ou la revendication 17 qui comprend l'étape additionnelle d'incorporer, dans ledit mélange de composants (A) et (B), un agent réticulant (C).

19. Méthode selon la revendication 18, où l'agent réticulant (C) est incorporé dans ledit mélange en une quantité de 0,1 à 10 % en poids des composants (A), (B) et (C).

20. Méthode selon la revendication 19, où le composant (A) comprend un polymère à base de polypropylène et l'agent réticulant est un monomère à insaturation éthylénique polyfonctionnel.